# EUROPEAN PATENT SPECIFICATION

(11) **EP 2 538 044 B1**
(45) Date of publication and mention of the grant of the patent: **25.11.2015**
(21) Application number: 12004482.1
(22) Date of filing: 14.06.2012
(51) Int. Cl.: F01M 11/06, F16H 57/04

(54) **Retention systems**
Rückhaltesysteme
Systèmes de rétention

(30) Priority: 21.06.2011 ES 201100706
(43) Date of publication of application: 26.12.2012
(73) Proprietor: Gamesa Innovation & Technology, S.L., 31621 Sarriguren (ES)
(72) Inventor: Sanchez Garcia, Fernando, 20159 - Asteasu Gipuzkoa (ES)

(56) References cited:
- WO-A1-03/031812
- JP-U- 59 112 098
- JP-U- 61 087 173
- JP-U- 61 151 013
- US-A- 4 658 665
- US-A1- 2006 054 410
- US-A1- 2008 045 369

## Description

### Object of the invention

The present invention refers to some lubricant retention systems for the existing oil baths in the first and second planetary stage of a gearbox. This gearbox is used inside a wind turbine.

### Background of the Invention

A gearbox is a usual part of the drive train, and the necessity of this element is justified by the different rotational regimens of a wind power rotor with respect to the electric generator producing power. The gears in the gearboxes could be straight or spiral, selecting spiral gears for the planetary-type gearboxes. Experience has shown that in the end, gearboxes with planetary shafts are the best option for high power machines.

The wind turbine used in the present invention is a machine with a rated power of 4.5 MW. It is thus considered to be high power machinery. The gearbox has two planetary stages, each one requiring a lubrication system with its corresponding oil bath. The oil deposit for the first planetary stage and the oil deposit in the second planetary stage "communicate" and it is essential to keep them from emptying during periods in which the machine turns without current, since this would result in risks against the integrity of the components.

While the machine is running, the gearbox is turning and the planetary stages maintain their oil baths in optimal conditions, without producing leaks or any considerable loss of oil levels. The foregoing is the result of gearbox's forced lubrication system by external electrical pump that continuously injects cooled oil in nominal operating conditions. That said, there is no oil injection inside the gearbox when the machine turns without current, and the lubricant inside the gearbox is affected by the slight inclination along the entire drive train with reference to the perpendicularity of the tower; thus resulting in losses. These losses are precluded with the retention systems described in this invention.

If a perpendicular plane were drawn on the upper part of the tower, the hub, drive train and the generator supported on their corresponding frame would appear inclined; set so as to prevent a possible impact of the blade against the tower base during deflection caused by the wind. The inclination is approximately 6° and, during periods in which the wind turbine turns without current, affects the oil baths in the gearboxes, resulting in lubricant losses.

### Description of the invention

An object of the invention is to preserve the oil levels in the baths of the first and second planetary stages of a gearbox, preventing losses during periods in which the gearbox turns without current.

Another object of the invention is to make a retention system available on the upper part between the first and the second planetary stages.

Lastly, another object of the invention is to make another retention system available on the lower part between the first planetary stage and the general oil deposit.

There is a lubrication circuit inside the gearbox operating with an electrical pump, yet in cases where there is no power supply, keeping the bearings and other parts adequately lubricated proves difficult. This circumstance makes it necessary to check oil levels during prolonged stops because even though the wind turbine is without current, there could be small movements of the rotor transmitted to bearings in the gearbox that could compromise its integrity if not properly lubricated.

In addition to these main characteristics, the retention systems present other secondary characteristics, namely: their easy adaptation to the existing design and fastening permitting transmission at all times through the planetary stages.

### Brief description of the drawings

The following figures are included in order to explain how the retention systems and their most substantial parts are constituted:
Figure 1 is a schematic view of the nacelle's inclination compared with the horizontal plane of the tower.
Figure 2 shows the communication between the first and second planetary stages on the upper part of the gearbox.
Figure 3 shows the communication between the first planetary stage and the main collector carrying the oil to the general deposit on the lower part of the gearbox.
Figure 4 represents the retention system applied to the case shown in figure 2.
Figure 5 is a perspective view of the solution applied to the joint shown in figure 3.

### Description of the preferential embodiment

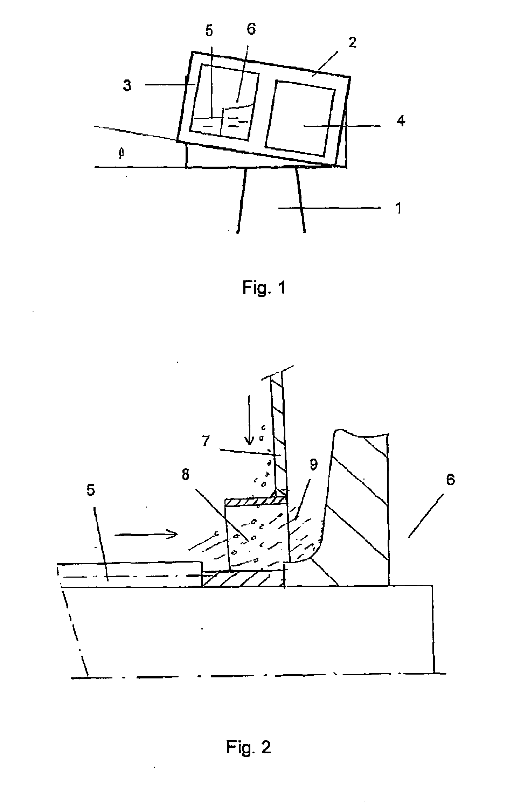

As shown in Figure 1, the wind turbine is supported on a tower (1). The nacelle (2) houses a gearbox (3) and a generator (4) connected together. The nacelle (2) is inclined at a certain angle β with a view to keeping the rotor blades (not shown in the figure) from hitting against the tower (1) when the action of prevailing winds bends them. This inclination affects the lubricant inside the gearbox (3) in that the part corresponding to the first planetary stage (5) passes to the second planetary stage (6), from which point lubricant is thus lost through the existing drainage channels necessary for cooling the lubricant outside the gearbox (3).

Figure 2 shows, in more detail, communication between the first planetary stage (5) and second planetary stage (6) on the upper part. The arrow indicates the direction of the lubricant flowing from the first planetary stage (5) to the screen (7). From there, the sketched oil drops (8) pass through to the second planetary stage (6) through the existing opening on the screen, becoming a pouring (9) that increases the level of lubricant in this stage and decreases the level in the first stage.

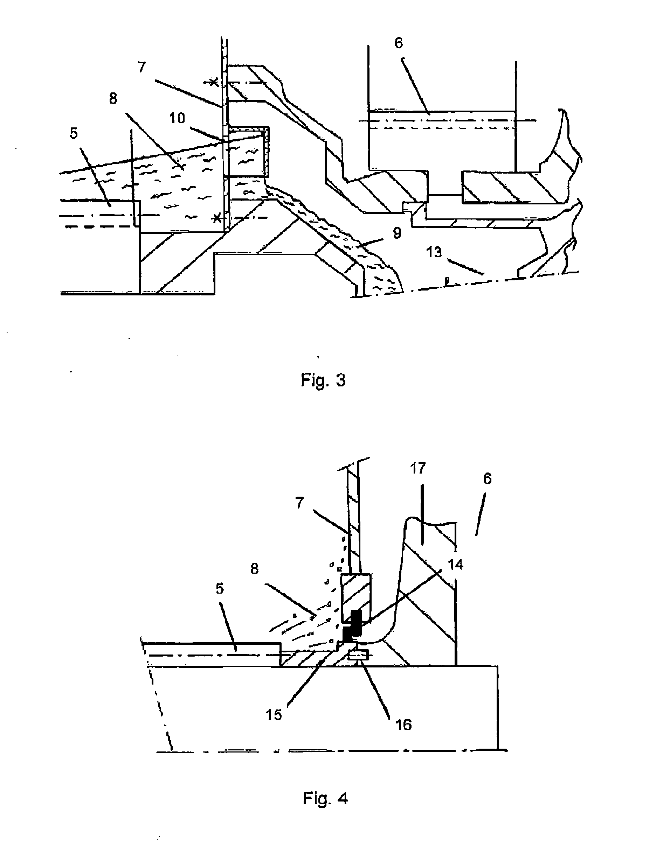

Figure 3 represents the communication between the first planetary stage (5) and the oil collector (13) on the lower part of the gearbox. The slanted continuous line shows the level of lubricant reaching the screen (7) separating both zones. Given the inclination of the nacelle and all the components located inside it, the lubricant reaches the communications window (10) on the screen (7) and once again becomes pouring of oil (9) passing from the first planetary stage (5) to the main collector (13) that conducts the oil to the main deposit.

Figure 4 is a repetition of figure 2 but with the retention system established on the screen (7) separating the first planetary stage (5) with the second planetary stage (6). Lubricant retention is carried out by a radial join (14). This joint is inserted into a specifically-fitted tray, which is in turn welded to the main screen (7). The joint has a lip that prevents oil passage by radial pressure on a bushing (15) that turns together with the solar shaft. Proper joint functioning requires that the bushing has no relative movement with respect to the shaft on which it is mounted. To keep the bushing from turning, an interference-free locking system has been incorporated based on a two-cylindrical pin assembly (16) mounted at 180° and fastened angularly. These two pins thus join the bushing to the planetary of the second stage (17).

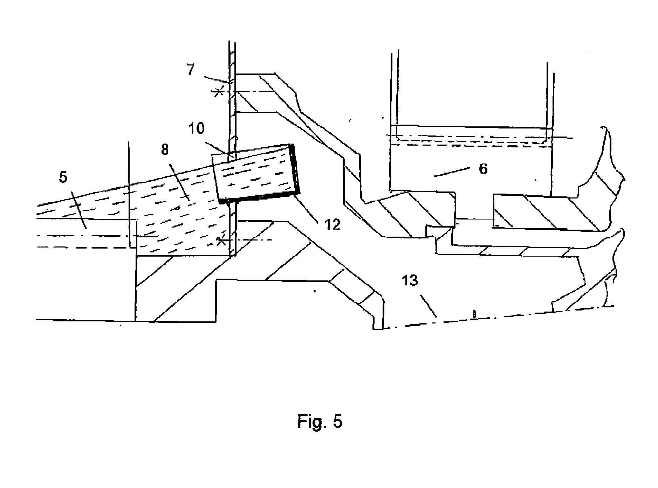

Figure 5 shows the retention system on the inside of the screen (7) separating the lowest part of the first planetary stage (5) from the main oil collector (13). This is a receptacle/tray (12) welded to the screen (7) at the opening or window (10) for communication existing on this screen, which communicates the two aforementioned zones. The walls on the receptacle/tray (12) act as a screen, preventing the oil from flowing freely into the main oil collector (13) during turning conditions without power.

## Claims

1. Lubricant retention system for existing oil baths in a first (5) and second (6) planetary stage of a gearbox (3) of a wind turbine that is supported on a tower (1) having a nacelle (2) inclined at a certain angle β, **characterized**
- **by** mounting an oil screen (7) that, on its upper part, closes off a passage of oil from the first stage (5) to the second stage (6) using a system formed by a radial joint (14) and an angular locking system (16)
- by mounting the oil screen (7), which on its lower part closes off the passage of oil from the first stage (5) to an oil deposit through a main collector (13) during rotation without current by means of a receptacle/tray (12).

2. Lubricant retention system for baths according to claim 1, **characterized in that** the radial joint (14) makes radial contact with a bushing (15) turning together with the gearbox shaft and equipped with an angular locking system (16) that avoids a relative movement of the bushing (15) with respect to the shaft on which it is mounted.

3. Lubricant retention system for baths according to claim 2, **characterized in that** the angular locking system (16) of the bushing (15) consists in an assembly of two cylindrical pins positioned at 180°, joining the bushing to the planetary of the second stage (17) and preventing the relative rotation between the bushing and the shaft on which it is mounted.

4. Lubricant retention system for baths according to claim 1, **characterized in that** the receptacle/tray (12) welded to the oil screen (7) at an opening or window (19) for the existing communication on this screen, keeps the oil from freely flowing to the main oil collector (13) under turning conditions without power.

## Patentansprüche

1. Schmiermittelrückhaltesystem für vorhandene Ölbäder in einer ersten (5) und zweiten (6) Planetenstufe eines Getriebes (3) einer Windenergieanlage, die auf einem Turm (1) angebracht ist, und die eine (2) Gondel besitzt, die mit einem bestimmten Winkel β geneigt ist, **gekennzeichnet**
- **durch** die Installation eines Ölsiebs (7), das an seinem oberen Teil einen Durchfluss von Öl von der ersten Stufe (5) zur zweiten Stufe (6) unter Verwendung einer Radialverbindung (14) und eines Winkelabsperrsystems (16) verhindert,
- **durch** Installation des Ölsiebs (7), das bei einer stromlosen Drehung an seinem unteren Teil den Durchfluss von Öl von der ersten Stufe (5) in , einen Ölspeicher durch einen Hauptsammler (13) verhindert, wozu ein Auffangbehälter/eine Wanne (12) verwendet wird.

2. Schmiermittelrückhaltesystem für Bäder gemäß Anspruch 1, **gekennzeichnet dadurch, dass** die Radialverbindung (14) einen radialen Kontakt mit einer Buchse (15) herstellt, die sich zusammen mit der Getriebewelle dreht, und die mit einem Winkelverriegelungssystem (16) ausgestattet ist, das eine relative Bewegung der Buchse (15) im Hinblick auf die Welle verhindert, auf der sie montiert ist.

3. Schmiermittelrückhaltesystem für Bäder gemäß Anspruch 2, **gekennzeichnet dadurch, dass** das Winkelverriegelungssystem (16) der Buchse (15) aus einer Baugruppe aus zwei zylindrischen Stiften besteht, die auf 180° positioniert sind, und die die Buchse mit dem Planetengetriebe der zweiten Stufe (17) verbinden und die relative Drehung zwischen der Buchse und der Welle, auf der sie montiert ist, verhindern.

4. Schmiermittelrückhaltesystem für Bäder gemäß Anspruch 1, **gekennzeichnet dadurch, dass** unter Drehbedingungen ohne Leistung der Auffangbehälteridie Wanne (12), der bzw. die an einer Öffnung oder einem Fenster (19) für den vorhandenen Übertragungsweg an diesem Sieb an das Ölsieb (7) geschweißt ist, verhindert, dass das Öl frei zum Hauptölsammler (13) fließt.

## Revendications

1. Système de rétention de lubrifiant pour les bains d'huile existant dans le premier (5) et le deuxième (6) étage planétaire d'un multiplicateur (3) d'éolienne qui repose sur une tour (1) ayant une nacelle (2) inclinée selon un certain angle β, **caractérisé**
- **par** le montage d'un filtre à huile (7) qui, dans sa partie supérieure, empêche la circulation d'huile entre le premier étage (5) et le deuxième étage (6) en utilisant un système constitué par un raccord radial (14) et un système de verrouillage angulaire (16),
- par le montage du filtre à huile (7) qui, dans sa partie inférieure, empêche la circulation d'huile provenant du premier étage (5) vers un réservoir d'huile à travers un collecteur principal (13) pendant une rotation sans courant par l'intermédiaire d'un bac de récupération (12).

2. Système de rétention de lubrifiant pour bains selon la revendication 1, **caractérisé en ce que** le raccord radial (14) forme un contact radial avec une douille (15) tournant de façon solidaire avec l'arbre du multiplicateur et équipé d'un système de verrouillage angulaire (16) qui évite le mouvement relatif de la douille (15) par rapport à l'arbre sur lequel elle est montée.

3. Système de rétention de lubrifiant pour bains selon la revendication 2, **caractérisé en ce que** le système de verrouillage angulaire (16) de la douille (15) consiste en un ensemble de deux goupilles cylindriques placées à 180°, unissant la douille au planétaire du deuxième, étage (17) et empêchant la rotation de la douille par rapport à l'arbre sur lequel elle est montée.

4. Système de rétention de lubrifiant pour bains selon la revendication 1, **caractérisé en ce que** le bac de récupération (12) soudé au filtre à huile (7) au niveau d'une ouverture ou fenêtre (19) pour assurer la communication avec ledit filtre, empêche l'huilé de circuler librement vers le collecteur d'huile principal (13) dans des conditions de rotation sans alimentation.
